(19) **Europäisches Patentamt**

**European Patent Office**

**Office européen des brevets**

(11) **EP 1 604 096 B1**

(12) **EUROPEAN PATENT SPECIFICATION**

(45) Date of publication and mention
of the grant of the patent:
**08.11.2006 Bulletin 2006/45**

(51) Int Cl.:
*E21B 47/09* (2006.01)     *E21B 47/01* (2006.01)
*G01V 1/44* (2006.01)

(21) Application number: **04713693.2**

(22) Date of filing: **23.02.2004**

(86) International application number:
**PCT/NL2004/000133**

(87) International publication number:
**WO 2004/074633 (02.09.2004 Gazette 2004/36)**

(54) **METHOD FOR DETERMINING A POSITION OF AN OBJECT**

VERFAHREN ZUR BESTIMMUNG EINER POSITION EINES OBJEKTES

PROCEDE DE DETERMINATION D'UNE POSITION D'UN OBJET

(84) Designated Contracting States:
**AT BE BG CH CY CZ DE DK EE ES FI FR GB GR
HU IE IT LI LU MC NL PT RO SE SI SK TR**

(30) Priority: **24.02.2003 NL 1022763**

(43) Date of publication of application:
**14.12.2005 Bulletin 2005/50**

(73) Proprietor: **Nederlandse Organisatie voor
Toegepast-Natuurwetenschappelijk Onderzoek
TNO
2628 VK Delft (NL)**

(72) Inventor: **DE JONG, Alwin**
**NL-2807 KH Gouda (NL)**

(74) Representative: **Winckels, Johannes Hubertus F.
et al
Vereenigde
Johan de Wittlaan 7
2517 JR Den Haag (NL)**

(56) References cited:
**DE-A- 3 139 733          US-A- 3 817 345
US-A- 5 680 906          US-B1- 6 189 383**

## Description

The invention relates to a method and apparatus for determining a mutual distance between two objects in a pipeline.

In the installation and maintenance of pipelines, for instance drill pipes used for extracting minerals such as oil or gas, there is a need to inspect these pipelines internally to detect fractures and/or corrosion in them, or to record environmental factors, such as temperature, pressure, or to perform measurements on substances *in situ.* For this purpose, probes have been developed which are sent through the pipeline and which comprise data acquisition systems for detecting and recording data of interest.

In such a detection, it is important to be able to determine the position of the sensor in the pipeline accurately, in order to obtain a reliable picture of the location where the data were recorded, for instance to be able to take meaningful measures at the location of an established defect in the pipeline.

For this purpose, a number of solutions are known, the most well known of which are the paying out of a probe on a cable and the use of a measuring wheel that is moved over the inner wall, with the number of revolutions recording the displacement. Further, the German patent specification DE3139733 discloses an apparatus with which a position detection is performed using an acoustic measuring system. This involves a probe being designed with an acoustic source, while a receiver is moved along the wall of the tube, on the outside, so that a position with a maximum amplitude detection indicates the position of the probe. The conventional methods have inherent disadvantages. For instance, using the position detection of the German patent specification, it is evidently not possible to determine the position of a probe in a pipeline drilled into the earth; further, cables or the recording of the distance by means of a measuring wheel (odometer) have the disadvantages that the probe may get stuck in the pipeline or that the measuring wheel slips. Further, in pipelines where media contained in the pipeline flow upwards, it is very difficult to perform measurements reliably by this procedure. Recently, measuring systems (so-called oilspore probes) have been developed which, in large numbers, are carried along with the upwardly moving media from a position located deeply in a drill pipeline, the individual probe recording a multiplicity of information and it being necessary at the same time to be able to perform a reliable position measurement of the probe in the pipeline.

The object of the invention is to resolve the disadvantages referred to and to provide a method with which the relative position of two objects in a pipeline, in particular, the distance between a measuring point and a probe, can be readily determined with a high degree of reliability.

This object is achieved by a method of the above-mentioned type, which method comprises the following steps:

- providing a pipeline which is filled with a medium having an acoustic impedance different from that of the material of the pipeline and/or a medium present outside the pipeline;
- providing each of the two objects with a clock; synchronizing the clocks;
- periodically transmitting an acoustic signal from a first to a second one of the two objects;
- measuring the reception time of the acoustic signal;
- determining the delay time from the first to the second object;
- calculating a traveled distance of the signal between the two objects on the basis of a propagation speed of the acoustic signal in the medium and the measured delay time of the acoustic signal.

Through the method of the invention, it is possible to perform a reliable position detection while usefully employing the waveguide properties of the pipeline. Due to the relatively clear-cut transition of acoustic impedance from the medium in the pipeline to the material of the pipeline wall, the energy of the acoustic wave remains well focused and there occurs relatively little loss resulting from acoustic energy dissipating from the wall. The acoustic signals are tuned to the guide properties of the pipeline and so composed in frequency that a relatively low degree of smearing occurs, as a result of which a clear rising flank in the amplitude form of the acoustic signal can be maintained, so that acoustic signals can be properly detected. Such signals, called chirps, can travel undisturbed for a prolonged time through the pipeline without the occurrence of disturbing scatter or smearing. A preferred band of applied frequencies is in a relatively low range of about 8 kHz.

Although the invention can be used to measure the mutual distance between two objects freely movable relative to the pipeline, in a preferred embodiment, from a pre-known positional relation of one of the two objects relative to the pipeline and from pre-known coordinate positions of the pipeline, the three-dimensional coordinate positions of the other one of the two objects can be derived. Here, it is possible not only to determine a probe's one-dimensional position along the pipeline, but also its absolute three-dimensional coordinate position, if, as is customary when drilling for minerals, the three-dimensional coordinate positions of the pipeline are known. It is possible here to detect environmental information from earth layers without this necessitating the probe being sounded out by means of a complicated seismic detection by multiple receivers, as is set out, for instance, in U.S. patent specification 3,817,345.

In a further preferred embodiment, the traveled distance is calculated as a summation of incremental traveled distances of the acoustic signal between consecutive periods of the periodic acoustic signal, with an incremental traveled distance being determined from the product of a period duration and a calculated local propagation speed of the acoustic signal. Such a determination is advantageously applied in cases where the propagation speed of the signal varies in place in the medium, as in the case of vertically extending pipelines, such as drill pipes, where the propagation speed can vary strongly due to increasing pressure and temperature.

To increase the time resolution, the receiver may be equipped with a filter for recording pulses in a predetermined time range. Afterwards, within defined limits, it can be determined exactly which pulses have been received, and hence the transmission time of the received pulses is also precisely known. As a consequence, it is possible to take into account any missed pulses: if within a particular range no pulse is received, it is assumed that the next received pulse was received one (or more) periods further on.

The invention is applied with advantage in the case where one the two objects is an acoustic source mounted on or in the pipeline, while the other one of the two objects is a probe freely movable through the pipeline. The pipeline can be a drill pipeline for drilling for and extracting minerals, such as oil and gas.

Preferably, the method utilizes an acoustic signal which propagates substantially through the medium enclosed by the pipeline. To prevent cavitation, because of the relatively large acoustic energies supplied, the acoustic source is preferably mounted at a relatively great depth adjacent the centerline of the pipeline. In another embodiment, the acoustic source delivers an acoustic signal into the pipeline at an acute angle with a central axis of the pipeline, via a sidewall. In yet another embodiment, the acoustic source is arranged on an end part placed transversely to the longitudinal axis of the pipeline, with an acoustic signal being delivered into the medium substantially parallel to the longitudinal axis of the pipeline. The end part can have a connection to a supply and/or discharge part for supplying and/or discharging minerals. In this embodiment, though, the pipe should be filled with liquid up to the end part, to be able to project the acoustic energy into the liquid to a sufficient extent.

In a still further embodiment, the probe comprises an acoustic sensor with a disc-shaped sensor element, the sensor element possessing a circumference that extends up to the walls of the holder. The disc-shaped acoustic sensor element can be a piezoelectric element. In the acoustic sensor element, an opening may be provided.

The invention further relates to an apparatus for determining a mutual distance between two objects in a pipeline which is filled with a medium having an acoustic impedance different from that of the material of the pipeline, comprising:

a first object which may possess a predetermined relational position relative to the pipeline and which is provided with an acoustic source for transmitting a periodic acoustic signal;

at least one second object, movable through the pipeline, provided with an acoustic receiver for receiving the transmitted acoustic signal and a timer for timing and recording the reception time of the received acoustic signal; which two objects are provided with a mutually synchronized clock; and

a calculating unit for calculating a local propagation speed of the signal in the medium and for calculating a traveled distance of the signal between the two objects on the basis of the propagation speed of the acoustic signal and the measured delay time of the acoustic signal.

In addition, the invention relates to a probe for moving through a pipeline filled with a medium having an acoustic impedance different from that of the material of the pipeline, comprising a spherical holder, detection means, a clock and recording means, the detection means comprising an acoustic sensor with a disc-shaped sensor element, which sensor element possesses a circumference which extends up to and touches the walls of the holder. It has been found that a sensor having such a relatively large acoustic detection surface which is in contact with the walls can effect a proper detection of the acoustic signals. Preferably, the acoustic sensor element is a piezoelectric element. To enhance sensitivity, an opening may be provided in the acoustic sensor element. This element further has as an advantage that a broader frequency range can be scanned and that the probe is less heavy in weight. In particular, by means of such an opening, the specific weight of the probe can be tuned to the medium in which the probe is active. Preferably, the acoustic sensor element has a sensitivity range of 6-12 kHz. The probe preferably possesses an active mode and an inactive, power-saving mode, in which active mode the probe, during a predetermined time interval, performs an acoustic measurement. Through the use of such an inactive sleep mode, the required battery unit can be made of smaller and lighter design, which influences the total weight of the probe, and by virtue of which the probe can perform measurements for a longer time. Preferably, the active mode is closed upon reception of an acoustic signal. If no acoustic signal was observed, an error message may be recorded. The period and/or duration of the predetermined time interval are settable depending on the desired duration of measurement.

The invention will be further elucidated with reference to the drawing. In the drawing:

Fig. 1 shows a schematic representation of the setup of a pipeline with an acoustic source and probe according to the invention;
Fig. 2 shows a schematic representation of a wave traveling through an acoustic medium;
Fig. 3 shows a series of periodically transmitted pulses which are recorded at a receiver after a certain delay time;

Fig.4 shows a diagram plotting the propagation speed which is derived by means of extrapolation;
Fig. 5 shows a schematic representation of a probe according to the invention; and
Fig. 6 shows a schematic representation of the reception of acoustic pulses by a probe according to the invention.

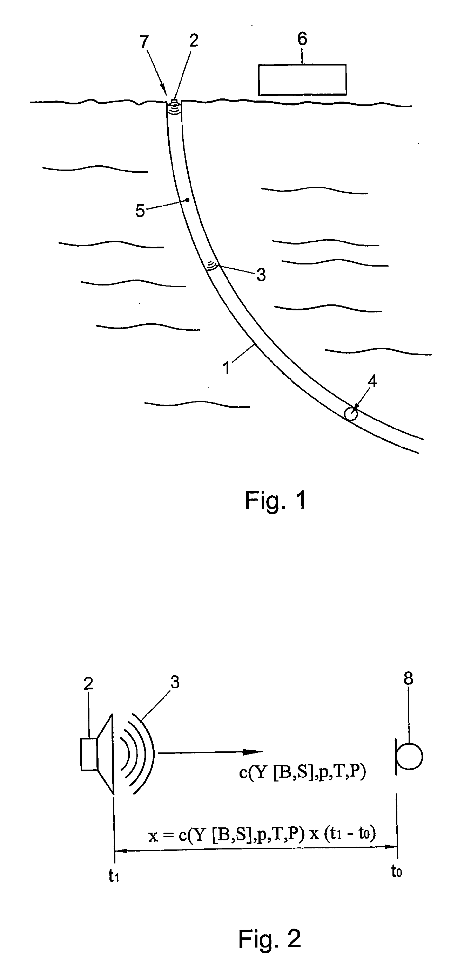

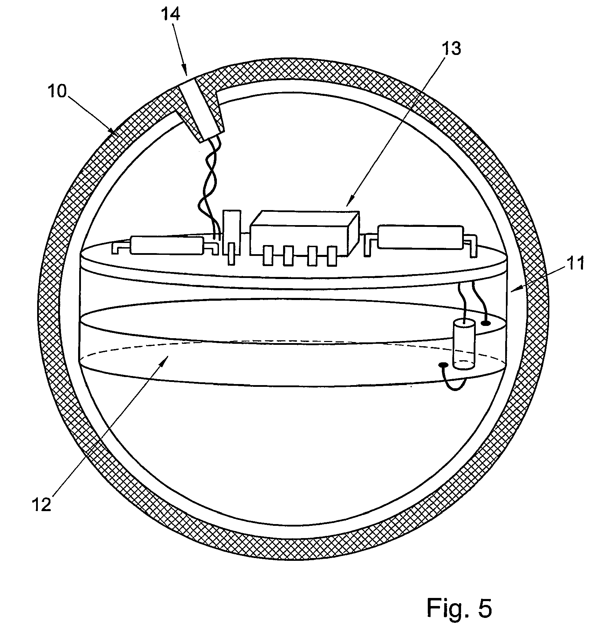

Referring to Fig. 1, presently the setup in which the method according to the invention can be used is addressed. The setup comprises a pipeline 1 which has been drilled into the earth, for instance for extracting oil, gas or other minerals. In the pipeline, an acoustic source 2 is arranged, which transmits signals to deeper portions in the pipe. These signals travel in the form of wave packages 3 through the pipe, which functions as a waveguide for the acoustic wave. Due to the acoustic properties of the pipe, the transmission losses are relatively small and the wave packages remain intact over long distances. As a consequence, it is possible to achieve a positional accuracy of 20 m on a total distance of up to 5,000 m. In the pipe, further, a probe 4 is included, explained in more detail with reference to Fig. 5. The probe 4 includes a receiver (not shown in Fig. 1) for receiving the acoustic signals from source 2, and can move through the pipeline 1 which is filled with a medium 5 (for instance a mixture of oil, gas and water). The medium has an acoustic impedance which is different from that of the material of the pipeline 1 (mostly steel), so that the pipeline can function as waveguide for the acoustic signals.

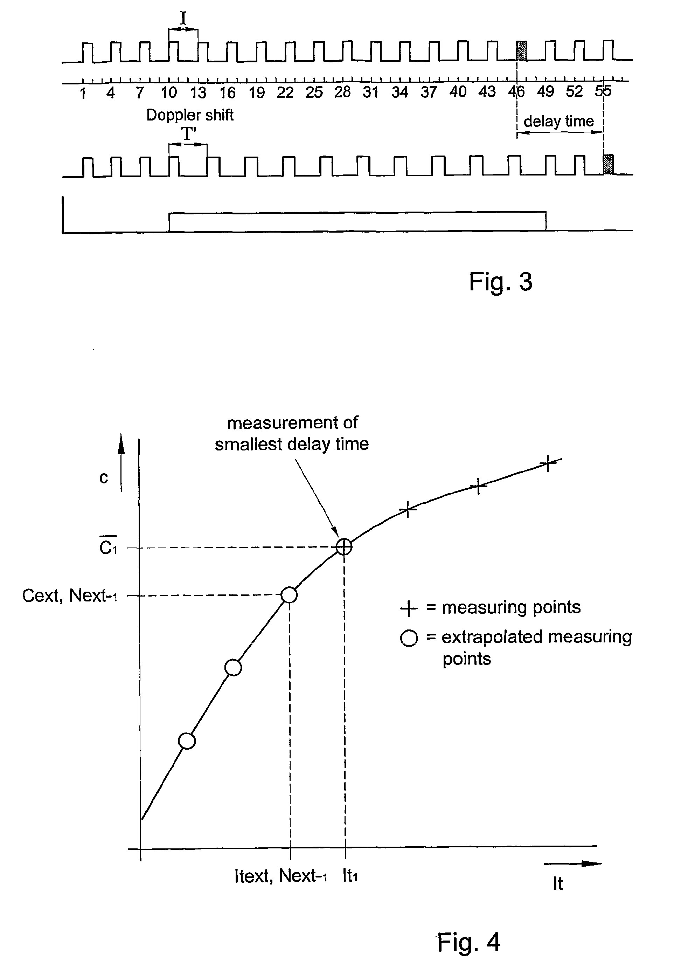

The source 2 and the probe 4 are equipped with a synchronized clock (not shown). By recording the arrival times of the consecutive pulses, the delay time thereof can be calculated. The drawing schematically shows a data acquisition system 6 which can read out the data from a memory (described with reference to Fig. 4) included in the probe 4. The data acquisition system 6 is provided with a calculating unit for calculating a local propagation speed of the signal in the medium and for calculating a traveled distance of the signal between the two objects, based on the propagation speed of the acoustic signal and the measured reception time of the acoustic signal.

In the drawing, the source 2 is included adjacent the end 7 of the pipeline, preferably at some depth of at least a few tens of meters under a liquid surface of a medium present in the pipe, to prevent the occurrence of cavitation as a result of the transmission of acoustic energy. This effect occurs if the ambient pressure is too low and hampers the transmission of the acoustic wave. By virtue of the pre-known positional relation of the acoustic source 2 relative to the pipeline, it is possible, if the coordinate positions of the pipeline 1 are known, to determine the three-dimensional coordinate positions of the probe 4 from the one-dimensional traveled distance of the probe 4 in the pipe.

In Fig. 2 it is schematically represented how the distance from the probe 4 to the source 2 can be determined from the delay time of the signal. The source 2 transmits an acoustic signal 3, which propagates through the acoustic medium 5 at a propagation speed C and is recorded by receiver 8 included in probe 4. The propagation speed depends on the Bulk modulus B, the specific density $\rho$, temperature T and pressure P. The distance x between transmitter 2 and receiver 8 is then calculated as the product of the propagation speed and the delay time of the signal, expressed by the difference of transmission and reception time $t_1$ and $t_0$.

The propagation speed in a liquid is expressed by the equation $c = \sqrt{\gamma \dfrac{B}{\rho}}$. wherein: $\gamma$ is the ratio of heat capacities, $B$ is the bulk modulus and $\rho$ is the specific density of the liquid. This equation can further be understood by studying Fundamentals of acoustics, Lawrence E. Kinsler, John Wiley & Sons.

In Fig. 3, it is illustrated how a series of periodically transmitted pulses upon lapse of some time are recorded by a receiver, the assumption being that the source and receiver move away relative to each other at a constant speed. Consequently, as a result of the Doppler shift, the signal period seems prolonged, that is, as is well-known, by a factor of (1 + v/c) wherein v is the relative speed of the source and receiver and c is the propagation speed through the medium. By counting the number of recorded clock pulses at the receiver 8, and taking the difference from the transmission time (which can be calculated by means of the synchronized clock), the delay time of a signal can be determined according to the formula described with reference to Fig. 2.

Referring to Fig. 4, it will now be described how the propagation speed of the medium can be determined by means of extrapolation. When the measuring probe has not performed any measurements at the beginning of the traveled path, the acoustic propagation speeds cannot be determined directly for that path. Since these speeds do contribute to the calculated positions of the rest of the measuring path, these speeds need to be determined in an indirect manner. This can be effected by performing a fit of the propagation speeds obtained from direct measuring points to a third-degree polynomial. This fit can be extrapolated up to the starting point of the traveled path. On the basis of this extrapolation, subsequently, at regular distances, average propagation speeds are determined. The points marked + represent transmission speeds calculated during a delay time, with a successive measuring point being formed by speeds calculated on the clock pulse, depending on a local pressure and temperature. By means of a fit, a speed can also be determined outside the measuring range (represented by the points marked O), so that a reliable estimate of the speed in intervening ranges can be made and the speeds at the peripheral points of a measuring range can be calculated. The measuring points can be determined by the probe, but can also be determined by means of other detection elements present in the pipe, possibly arranged at fixed, pre-known positions, or even be derived, possibly in rough approximation, from a theoretical relation between depth, pressure and temperature.

Fig. 5, finally, represents a measuring probe 4, provided with an acoustic receiver according to the invention. To this end, the probe 4 includes a spherical holder 9 which is suitable to resist the relatively elevated pressures up to and in excess of 300 bars. The holder is made up of a protective outer shell 10 of a synthetic resin and an inner shell 11. Touching the inner wall of the inner shell 11 is a piezoelectric element 12 which possesses a circumference extending up to and touching the walls of the inner shell 11. As a consequence, the acoustic pressure waves acting on the measuring probe 4 are transmitted to the element 12, which deforms as a result. Under the influence of this deformation, the element generates an electric charge which is measured in the electronic circuit 13 which is arranged in the probe. This electronic circuit is further in communication with sensors 14 for recording environmental factors such as pressure and temperature and has storage elements for storing the recorded data. Thus, a probe 4 is formed with an acoustic sensor in the form of a disc, which preferably further comprises an opening, for instance a central opening, for generating higher local deformations, so that the recorded voltage of the piezo element is enhanced and is detectable with a greater resolution. The sensitivity range is then in the order of 6 to 12 kHz.

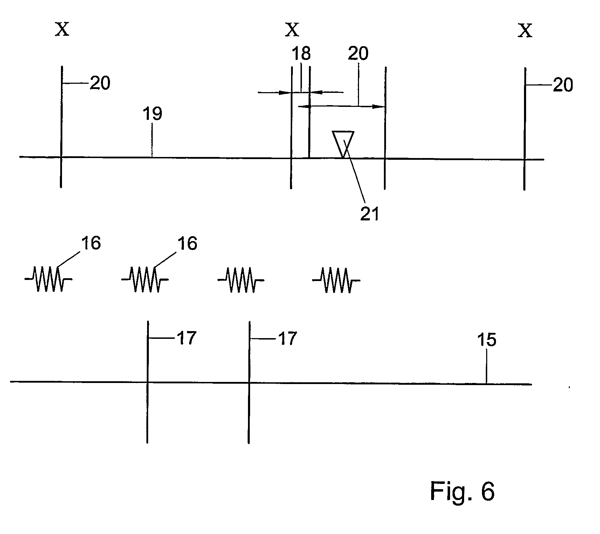

Fig. 6 gives a schematic representation of the reception of acoustic pulses by a preferred embodiment of the probe. According to this preferred embodiment, the probe is provided with a timer circuit which can bring the probe in an active measuring mode and which after the lapse of a predetermined interval can bring the probe back into a passive, power-saving mode. Through the use of such an inactive sleep mode, the required battery unit can be made of smaller and lighter design, which influences the total weight of the probe and by virtue of which the probe can perform measurements for a longer time. Preferably, the active mode is closed upon reception of an acoustic signal. If no acoustic signal was observed, an error message can be recorded. In Fig. 6, the lower line 15 represents a time line, while periodically acoustic pulses 16 are transmitted at times 17 determined by a reference clock. This reference clock is preferably very accurate. The probe is likewise designed with a clock. The deviation 18 of this clock can normally run up to a few tens of milliseconds. The time line 19 reflects when the probe is brought in the active mode. By way of example, a measuring interval 20 is represented, in which a time registration 21 of an acoustic measurement is performed.

Further, it may happen that some pulses are missed due to the occurrence of barriers. After the whole measuring path has been traversed, the data stored by the probe will be read out. Next, it is determined what acoustic pulses (pulse numbers) have been received. This is done on the basis of the known inaccuracy of the clock in the probe; the known inaccuracy of the stable reference clock; the period between two consecutive transmitted acoustic pulses and the programmed duration of the measuring interval. Thus, the proper transmission times and hence the delay time and the traveled path of the pulses can be calculated, while the maximum deviation can be determined on the basis of the above-mentioned inaccuracies. What holds here, however, is the restriction that the transmission period of the acoustic pulses must not be less than the maximum absolute time error of the internal measuring probe clock. Normally, that is not a problem because the transmission period is typically in the order of magnitude of one to a few seconds, whereas the maximum absolute time error is in the order of magnitude of 36 to 180 milliseconds.

Although the invention has been described on the basis of the preferred embodiments, the invention is not limited thereto, but can also comprise variations or modifications without deviating from the basic concept. Thus, the local speed can be calculated from a single recorded parameter, such as a pressure or a temperature, while the speed can be derived via a theoretical relation. Further, in the probe, a second acoustic transceiver unit may be arranged, which can calculate a local propagation speed through reflections on the pipeline wall. For above-ground horizontal distribution and transport lines, where the pressure may be assumed to be reasonably constant, a single average pressure measurement could suffice. In piping systems where the temperature is reasonably constant, a single average temperature measurement can suffice.

Such variations are understood to fall within the scope of the invention as defined in the following claims.

**Claims**

1. A method for determining a mutual distance between two objects (2, 4) in a pipeline (1), comprising the steps of:

   - providing a pipeline(1) which is filled with a medium (5) having an acoustic impedance different from that of the material of the pipeline(1) and/or a medium (5) present outside the pipeline (1);
   - providing each of the two objects (2, 4) with a clock;
   - synchronizing the clocks;
   - periodically transmitting an acoustic signal (3) from a first to a second one of the two objects (2, 4);
   - measuring the reception time of the acoustic signal (3);
   - determining the delay time from the first to the second object (4);
   - determining or calculating a propagation speed of the acoustic signal (3) in the medium (5); and
- calculating a travelled distance of the signal between the two objects (2, 4) on the basis of said propagation speed of the acoustic signal (3) in the medium (5) and the measured delay time of the acoustic signal (3).

2. A method according to claim 1, **characterized in that** the method comprises the further steps of deriving, from a pre-known positional relation of one of the two objects (2, 4) relative to the pipeline (1) and from pre-known coordinate positions of the pipeline (1), the three-dimensional coordinate positions of the other one of the two objects (2, 4).

3. A method according to at least one of the preceding claims, **characterized in that** the travelled distance is calculated as a summation of incremental travelled distances of the acoustic signal (3) between successive periods of the periodic acoustic signal (3); wherein an incremental travelled distance is determined from the product of a period duration and a calculated local transmission speed of the acoustic signal (3).

4. A method according to at least one of the preceding claims, **characterized in that** the receiver is equipped with a filter for recording pulses in a predetermined time range.

5. A method according to at least one of the preceding claims, **characterized in that** one of the two objects (2, 4) is an acoustic source (2) mounted on or in the pipeline (1), and that the other one of the two objects (2, 4) is a probe (4) freely movable through the pipeline (1).

6. A method according to at least one of the preceding claims, **characterized in that** the pipeline (1) is a drill pipeline (1) for drilling for and extracting minerals, such as oil and gas.

7. A method according to at least one of the preceding claims, wherein the acoustic source (2) is arranged such that an acoustic signal (3) propagates substantially through the medium (5) enclosed by the pipeline (1).

8. A method according to at least one of the preceding claims, **characterized in that** the acoustic source (2) is mounted at a relatively great depth adjacent the central axis of the pipeline (1).

9. A method according to at least one of the preceding claims, **characterized in that** the acoustic source (2) delivers an acoustic signal (3) into the pipeline (1) at an acute angle with a central axis of the pipeline (1), via a sidewall.

10. A, method according to at least one of the preceding claims, **characterized in that** the acoustic source (2) is arranged on an end part placed transversely to the longitudinal axis of the pipeline (1), wherein an acoustic signal (3) is delivered into the medium (5) substantially parallel to the longitudinal axis of the pipeline (1).

11. A method according to claim 10, **characterized in that** the end part has a connection to a supply and/or discharge part for supplying and/or discharging minerals.

12. A method according to at least one of the preceding claims, **characterized in that** the probe (4) comprises an acoustic sensor with a disc-shaped sensor element, which sensor element possesses a circumference extending up to the walls of the holder.

13. A method according to claim 12, **characterized in that** the disc-shaped acoustic sensor element is a piezoelectric element.

14. A method according to claim 13, **characterized in that** in the acoustic sensor element, an opening is provided.

15. An apparatus for determining a mutual distance between two objects (2, 4) in a pipeline (1) which is filled with a medium (5) having an acoustic impedance different from that of the material of the pipeline (1), comprising:

> - a first object which may possess a predetermined relational position relative to the pipeline (1) and which is provided with an acoustic source (2) for transmitting a periodic acoustic signal (3);
> - at least one second object, movable through the pipeline (1), provided with an acoustic receiver for receiving the transmitted acoustic signal (3) and a timer for timing and recording the reception time of the received acoustic signal (3); which two objects (2, 4) are provided with a mutually synchronized clock; and
> - a calculating unit for calculating or determining a local propagation speed of the signal in the medium (5) and for calculating a travelled distance of the signal between the two objects (2, 4) on the basis of the propagation speed of the acoustic signal (3) and the measured delay time of the acoustic signal (3).

16. A probe (4) for freely moving through a pipeline (1) filled with a medium (5) having an acoustic impedance different from that of the material of the pipeline (1), comprising a spherical holder, detection means, a clock unit and recording means, the detection means comprising an acoustic sensor with a disc-shaped sensor element, which sensor element possesses a circumference which extends up to and touches the walls of the holder.

17. A probe (4) according to claim 16, **characterized in that** the acoustic sensor element is a piezoelectric element.

18. A probe (4) according to at least one of the claims 16-17, **characterized in that** in the acoustic sensor element, an opening is provided.

19. A probe (4) according to at least one of the claims 16-18, **characterized in that** the acoustic sensor element has a sensitivity range of 6-12 kHz.

20. A probe (4) according to at least one of the claims 16-19, **characterized in that** the probe (4) possesses an active mode and an inactive power-saving mode, in which active mode the probe (4) performs an acoustic measurement during a predetermined time interval.

21. A probe (4) according to claim 20, **characterized in that** the active mode is closed upon reception of an acoustic signal (3).

22. A probe (4) according to claim 20 or 21, **characterized in that** the active mode is closed upon lapse of a predetermined time interval, while, if no acoustic signal (3) was received, an error message is recorded.

23. A probe (4) according to at least one of the claims 20-22, **characterized in that** the period and/or duration of the predetermined time interval is/are settable.


**Patentansprüche**

1. Verfahren zum Bestimmen eines gegenseitigen Abstands zwischen zwei Objekten (2, 4) in einer Rohrleitung (1) mit den Schritten:

   - Bereitstellen einer Rohrleitung (1), die mit einem Medium (5) gefüllt ist, das eine akustische Impedanz aufweist, die von der des Materials der Rohrleitung (1) und/oder eines außerhalb der Rohrleitung (1) vorhandenen Mediums (5) verschieden ist,
   - Ausstatten von jedem der zwei Objekte (2, 4) mit einer Uhr,
   - Synchronisieren der Uhren,
   - periodisches Übertragen eines akustischen Signals (3) von einem ersten zu einem zweiten der zwei Objekte (2, 4),

   - Messen der Empfangzeit des akustischen Signals (3),
   - Bestimmen der Laufzeit von dem ersten zu dem zweiten Objekt (4),
   - Bestimmen oder Berechnen einer Ausbreitungsgeschwindigkeit des akustischen Signals (3) in dem Medium (5) und
   - Berechnen einer zurückgelegten Entfernung des Signals zwischen den zwei Objekten (2, 4) auf der Basis der Ausbreitungsgeschwindigkeit des akustischen Signals (3) in dem Medium (5) und der gemessenen Laufzeit des akustischen Signals (3).

2. Verfahren nach Anspruch 1, **dadurch gekennzeichnet, dass** das Verfahren die weiteren Schritte aüfweist, aus einer vorbekannten Positionsbeziehung von einem der zwei Objekte (2, 4) in Bezug auf die Rohrleitung (1) und aus vorbekannten Koordinatenpositionen der Rohrleitung (1) die dreidimensionalen Koordinatenpositionen des anderen der zwei Objekte (2, 4) abzuleiten.

3. Verfahren nach mindestens einem der vorhergehenden Ansprüche, **dadurch gekennzeichnet, dass** die zurückgelegte Entfernung als eine Summation inkrementeller zurückgelegter Entfernungen des akustischen Signals (3) zwischen aufeinanderfolgenden Perioden des periodischen akustischen Signals (3) berechnet wird, wobei eine inkrementelle zurückgelegte Entfernung aus dem Produkt einer Periodendauer und einer berechneten lokalen Übertragungsgeschwindigkeit des akustischen Signals (3) bestimmt wird.

4. Verfahren nach mindestens einem der vorhergehenden Ansprüche, **dadurch gekennzeichnet, dass** der Empfänger mit einem Filter zum Aufzeichnen von Impulsen in einem vorbestimmten Zeitbereich ausgerüstet ist.

5. Verfahren nach mindestens einem der vorhergehenden Ansprüche, **dadurch gekennzeichnet, dass** eines der zwei Objekte (2, 4) eine akustische Quelle (2) ist, die an oder in der Rohrleitung (1) montiert ist, und dass das andere der zwei Objekte (2, 4) eine Sonde (4) ist, die frei durch die Rohrleitung (1) bewegbar ist.

6. Verfahren nach mindestens einem der vorhergehenden Ansprüche, **dadurch gekennzeichnet, dass** die Rohrleitung (1) eine Bohrrohrleitung (1) zum Bohren nach und Extrahieren von Mineralien, wie etwa Öl und Gas, ist.

7. Verfahren nach mindestens einem der vorhergehenden Ansprüche, bei dem die akustische Quelle (2) so angeordnet ist, dass sich ein akustisches Signal (3) im Wesentlichen durch das Medium (5) ausbreitet, das von der Rohrleitung (1) umschlossen ist.

8. Verfahren nach mindestens einem der vorhergehenden Ansprüche, **dadurch gekennzeichnet, dass** die akustische Quelle (2) in einer relativ großen Tiefe benachbart zu der Mittelachse der Rohrleitung (1) montiert ist.

9. Verfahren nach mindestens einem der vorhergehenden Ansprüche, **dadurch gekennzeichnet, dass** die akustische Quelle (2) ein akustisches Signal (3) in die Rohrleitung (1) in einem spitzen Winkel zu einer Mittelachse der Rohrleitung (1) über eine Seitenwand abgibt.

10. Verfahren nach mindestens einem der vorhergehenden Ansprüche, **dadurch gekennzeichnet, dass** die akustische Quelle (2) an einem Endteil angeordnet ist, das quer zu der Längsachse der Rohrleitung (1) angeordnet ist, wobei ein akustisches Signal (3) in das Medium (5) im Wesentlichen parallel zu der Längsachse der Rohrleitung (1) abgegeben wird.

11. Verfahren nach Anspruch 10, **dadurch gekennzeichnet, dass** das Endteil eine Verbindung zu einem Zufuhr- und/oder Abgabeteil zum Zuführen und/oder Abgeben von Mineralien hat.

12. Verfahren nach mindestens einem der vorhergehenden Ansprüche, **dadurch gekennzeichnet, dass** die Sonde (4) einen akustischen Sensor mit einem scheibenförmigen Sensorelement aufweist, das einen Umfang besitzt, der sich bis zu den Wänden des Halters erstreckt.

13. Verfahren nach Anspruch 12, **dadurch gekennzeichnet, dass** das scheibenförmige akustische Sensorelement ein piezoelektrisches Element ist.

14. Verfahren nach Anspruch 13, **dadurch gekennzeichnet, dass** in dem akustischen Sensorelement eine Öffnung vorgesehen ist.

15. Vorrichtung zum Bestimmen eines gegenseitigen Abstands zwischen zwei Objekten (2, 4) in einer Rohrleitung (1), die mit einem Medium (5) gefüllt ist, das eine akustische Impedanz aufweist, die von der des Materials der Rohrleitung (1) verschieden ist, umfassend:

    - ein erstes Objekt, das eine vorbestimmte verhältnismäßige Position in Bezug auf die Rohrleitung (1) besitzen kann und das mit einer akustischen Quelle (2) zum Aussenden eines periodischen akustischen Signals (3) ausgestattet ist,
    - mindestens ein zweites Objekt, das durch die Rohrleitung (1) bewegbar ist und mit einem akustischen Empfänger zum Empfangen des ausgesandten akustischen Signals (3) und einem Zeitmesser zur zeitlichen Bestimmung und Aufzeichnung der Empfangszeit des empfangenen akustischen Signals (3) ausgestattet ist, wobei die zwei Objekte (2, 4) mit einer wechselseitig synchronisierten Uhr ausgestattet sind, und
    - eine Berechnungseinheit zum Berechnen oder Bestimmen einer lokalen Ausbreitungsgeschwindigkeit des Signals in dem Medium (5) und zum Berechnen einer zurückgelegten Entfernung des Signals zwischen den zwei Objekten (2, 4) auf der Basis der Ausbreitungsgeschwindigkeit des akustischen Signals (3) und der gemessenen Laufzeit des akustischen Signals (3).

16. Sonde (4) zur freien Bewegung durch eine Rohrleitung (1), die mit einem Medium (5) gefüllt ist, das eine akustische Impedanz hat, die von der des Materials der Rohrleitung (1) verschieden ist, wobei die Sonde (4) einen sphärischen Halter, eine Detektionseinrichtung, eine Uhreneinheit und eine Aufzeichnungseinrichtung aufweist, wobei die Detektionseinrichtung einen akustischen Sensor mit einem scheibenförmigen Sensorelement aufweist, das einen Umfang besitzt, der sich bis zu den Wänden des Halters erstreckt und diese berührt.

17. Sonde (4) nach Anspruch 16, **dadurch gekennzeichnet, dass** das akustische Sensorelement ein piezoelektrisches Element ist.

18. Sonde (4) nach mindestens einem der Ansprüche 16 bis 17, **dadurch gekennzeichnet, dass** in dem akustischen Sensorelement eine Öffnung vorgesehen ist.

19. Sonde (4) nach mindestens einem der Ansprüche 16 bis 18, **dadurch gekennzeichnet, dass** das akustische Sensorelement einen Empfindlichkeitsbereich von 6 bis 12 kHz hat.

20. Sonde (4) nach mindestens einem der Ansprüche 16 bis 19, **dadurch gekennzeichnet, dass** die Sonde (4) eine aktive Betriebsart und eine inaktive, energiesparende Betriebsart hat, wobei die Sonde (4) in der aktiven Betriebsart eine akustische Messung während eines vorbestimmten Zeitintervalls ausführt.

21. Sonde (4) nach Anspruch 20, **dadurch gekennzeichnet, dass** die aktive Betriebsart nach dem Empfang eines akustischen Signals (3) beendet wird.

22. Sonde nach Anspruch 20 oder 21, **dadurch ge-**

**kennzeichnet, dass** die aktive Betriebsart nach Ablauf eines vorbestimmten Zeitintervalls beendet wird, während, wenn kein akustisches Signal (3) empfangen wurde, eine Fehlernachricht aufgezeichnet wird.

23. Sonde (4) nach mindestens einem der Ansprüche 20 bis 22, **dadurch gekennzeichnet, dass** die Periode und/oder Dauer des vorbestimmten Zeitintervalls einstellbar ist/sind.

## Revendications

1. Procédé pour déterminer une distance mutuelle entre deux objets (2, 4) dans un pipeline (1), comportant les étapes consistant à :

   - fournir un pipeline (1) qui est rempli d'un milieu (5) ayant une impédance acoustique différente de celle du matériau du pipeline (1) et/ou d'un milieu (5) présent à l'extérieur du pipeline (1),
   - munir chacun des deux objets (2, 4) d'une horloge,
   - synchroniser les horloges,
   - transmettre périodiquement un signal acoustique (3) depuis un premier vers un second des deux objets (2, 4),
   - mesurer le temps de réception du signal acoustique (3),
   - déterminer le temps de retard entre le premier et le second objet (4),
   - déterminer ou calculer une vitesse de propagation du signal acoustique (3) dans le milieu (5), et
   - calculer une distance parcourue du signal entre les deux objets (2, 4) sur la base de ladite vitesse de propagation du signal acoustique (3) dans le milieu (5) et du temps de retard mesuré du signal acoustique (3).

2. Procédé selon la revendication 1, **caractérisé en ce que** le procédé comporte les étapes supplémentaires consistant à dériver, d'après une relation positionnelle préconnue d'un des deux objets (2, 4) par rapport au pipeline (1) et d'après des positions de coordonnées préconnues du pipeline (1), les positions de coordonnées tridimensionnelles de l'autre des deux objets (2, 4).

3. Procédé selon l'une quelconque des revendications précédentes, **caractérisé en ce que** la distance parcourue est calculée sous forme d'une sommation des distances parcourues incrémentielles du signal acoustique (3) entre des périodes successives du signal acoustique périodique (3), dans lequel une distance parcourue incrémentielle est déterminée d'après le produit d'une durée de période et d'une vitesse de transmission locale calculée du signal acoustique (3).

4. Procédé selon l'une quelconque des revendications précédentes, **caractérisé en ce que** le récepteur est équipé d'un filtre pour enregistrer des impulsions dans une plage de temps prédéterminée.

5. Procédé selon l'une quelconque des revendications précédentes, **caractérisé en ce qu'**un des deux objets (2, 4) est une source acoustique (2) montée sur ou dans le pipeline (1), et que l'autre objet des deux objets (2, 4) est une sonde (4) mobile librement à travers le pipeline (1).

6. Procédé selon l'une quelconque des revendications précédentes, **caractérisé en ce que** le pipeline (1) est un pipeline de forage (1) pour forer et extraire des minéraux, tels que de l'huile et du gaz.

7. Procédé selon l'une quelconque des revendications précédentes, dans lequel la source acoustique (2) est agencée de sorte qu'un signal acoustique (3) se propage essentiellement à travers le milieu (5) enfermé par le pipeline (1).

8. Procédé selon l'une quelconque des revendications précédentes, **caractérisé en ce que** la source acoustique (2) est montée à une profondeur relativement importante adjacente à l'axe central du pipeline (1).

9. Procédé selon l'une quelconque des revendications précédentes, **caractérisé en ce que** la source acoustique (2) délivre un signal acoustique (3) dans le pipeline (1) à un angle aigu par rapport à un axe central du pipeline (1), via une paroi latérale.

10. Procédé selon l'une quelconque des revendications précédentes, **caractérisé en ce que** la source acoustique (2) est agencée sur une partie d'extrémité placée transversalement à l'axe longitudinal du pipeline (1), dans lequel un signal acoustique (3) est délivré dans le milieu (5) essentiellement parallèlement à l'axe longitudinal du pipeline (1).

11. Procédé selon la revendication 10, **caractérisé en ce que** la partie d'extrémité a une connexion à un orifice d'alimentation et/ou de décharge pour alimenter et/ou décharger des minéraux.

12. Procédé selon l'une quelconque des revendications précédentes, **caractérisé en ce que** la sonde (4) comporte un capteur acoustique ayant un élément de capteur en forme de disque, lequel élément de capteur possède une circonférence s'étendant jusqu'aux parois du support.

**13.** Procédé selon la revendication 12 , **caractérisé en ce que** l'élément de capteur acoustique en forme de disque est un élément piézoélectrique.

**14.** Procédé selon la revendication 13, **caractérisé en ce que** dans l'élément de capteur acoustique, une ouverture est agencée.

**15.** Appareil pour déterminer une distance mutuelle entre deux objets (2, 4) dans un pipeline (1), qui est rempli d'un milieu (5) ayant une impédance acoustique différente de celle du matériau du pipeline (1), comportant :

- un premier objet qui peut posséder une position relationnelle prédéterminée par rapport au pipeline (1) et qui est muni d'une source acoustique (2) pour transmettre un signal acoustique périodique (3),
- au moins un second objet, mobile à travers le pipeline (1), muni d'un récepteur acoustique pour recevoir le signal acoustique transmis (3) et une minuterie pour cadencer et enregistrer le temps de réception du signal acoustique reçu (3), lesquels deux objets (2, 4) sont munis d'une horloge synchronisée mutuellement, et
- une unité de calcul pour calculer ou déterminer une vitesse de propagation locale du signal dans le milieu (5) et pour calculer une distance parcourue du signal entre les deux objets (2, 4) sur la base de la vitesse de propagation du signal acoustique (3) et du temps de retard mesuré du signal acoustique (3).

**16.** Sonde (4) destinée à se déplacer librement à travers un pipeline (1) rempli d'un milieu (5) ayant une impédance acoustique différente de celle du matériau du pipeline (1), comportant un support sphérique, des moyens de détection, une unité d'horloge et des moyens d'enregistrement, les moyens de détection comportant un capteur acoustique ayant un élément de capteur en forme de disque, lequel élément de capteur possède une circonférence qui s'étend jusqu'aux parois du support, et vient toucher celles-ci.

**17.** Sonde (4) selon la revendication 16, **caractérisée en ce que** l'élément de capteur acoustique est un élément piézoélectrique.

**18.** Sonde (4) selon l'une quelconque des revendications 16 et 17, **caractérisée en ce que** dans l'élément de capteur acoustique, une ouverture est agencée.

**19.** Sonde (4) selon l'une quelconque des revendications 16 à 18, **caractérisée en ce que** l'élément de capteur acoustique a une plage de sensibilité de 6 à 12 kHz.

**20.** Sonde (4) selon l'une quelconque des revendications 16 à 19, **caractérisée en ce que** la sonde (4) possède un mode actif et un mode d'économie d'énergie inactif, dans lequel mode actif la sonde (4) effectue une mesure acoustique pendant un intervalle de temps prédéterminé.

**21.** Sonde (4) selon la revendication 20, **caractérisée en ce que** le mode actif est fermé lors de la réception d'un signal acoustique (3).

**22.** Sonde (4) selon la revendication 20 ou 21, **caractérisée en ce que** le mode actif est fermé lorsqu'un intervalle de temps prédéterminé est écoulé, alors que, si aucun signal acoustique (3) n'a été reçu, un message d'erreur est enregistré.

**23.** Sonde (4) selon l'une quelconque des revendications 20 à 22, **caractérisée en ce que** la période et/ou la durée de l'intervalle de temps prédéterminé sont ajustables.

Fig. 1

$$x = c(Y\,[B,S],p,T,P) \times (t_1 - t_0)$$

Fig. 2

Fig. 3

Fig. 4

Fig. 5

X                    X                    X

18        20
20                                                        20

19

21

16            16

—WW—        —WW—        —WW—        —WW—

—17        —17                            15

Fig. 6